(19) **Europäisches Patentamt**
**European Patent Office**
**Office européen des brevets**

(11) **EP 2 896 821 B1**

(12) **EUROPEAN PATENT SPECIFICATION**

(45) Date of publication and mention
of the grant of the patent:
**03.05.2017  Bulletin 2017/18**

(51) Int Cl.:
*F03B 13/06* (2006.01)      *H02J 3/00* (2006.01)
*H02J 3/14* (2006.01)

(21) Application number: **13777299.2**

(22) Date of filing: **20.06.2013**

(86) International application number:
**PCT/ES2013/070398**

(87) International publication number:
**WO 2014/020199 (06.02.2014 Gazette 2014/06)**

(54) **MIXED PUMPED-STORAGE POWER PLANT AND METHOD OF GENERATING AND STORING ENERGY**

GEMISCHTES PUMPSPEICHERKRAFTWERK UND METHODE ZUR ERZEUGUNG UND SPEICHERUNG VON ENERGIE

CENTRALE DE POMPAGE MIXTE ET PROCÉDÉ DE GÉNÉRATION ET DE STOCKAGE D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **03.08.2012  ES 201231265**

(43) Date of publication of application:
**22.07.2015  Bulletin 2015/30**

(73) Proprietor: **Bunt Planet S.L.**
**20018 San Sebastián (ES)**

(72) Inventors:
• **GARCÍA-ALONSO MONTOYA, Andrés**
**E-20018 San Sebastián (ES)**
• **LETE NÚÑEZ, Ainhoa**
**E-20018 San Sebastián (ES)**

• **NAVAS MARTÍNEZ, Raúl**
**E-20018 San Sebastián (ES)**

(74) Representative: **ABG Patentes, S.L.**
**Avenida de Burgos, 16D**
**Edificio Euromor**
**28036 Madrid (ES)**

(56) References cited:
**EP-A1- 2 108 831      WO-A2-2012/053988**
**GB-A- 2 454 260      US-A1- 2011 113 769**

• **Ertunga C Özelkan ET AL: "Linear quadratic dynamic programming for water reservoir management", Applied Mathematical Modelling, 1 September 1997 (1997-09-01), pages 591-598, XP055099654, DOI: 10.1016/S0307-904X(97)00078-4 Retrieved from the Internet: URL:http://www.sciencedirect.com/science/article/pii/S0307904X97000784 [retrieved on 2014-01-31]**

**Description**

<u>Object of the Invention</u>

The present invention relates to a mixed pumped-storage power plant and to a method of generating and storing electric energy from said storage power plant.

<u>Background of the Invention</u>

There are many different energy generation systems today. Specifically, within the field of the invention, i.e., the field of hydroelectric power, there are hydroelectric storage power plants transforming the potential energy of a fluid into electric energy, and pumped-storage power plants transforming the potential energy of a fluid into electric energy and vice versa, and storing it. There are also mixed pumped-storage power plants in which, in addition to the water flow between the reservoir and the counter reservoir, there is a net water flow entering the higher reservoir and exiting the lower reservoir which corresponds to the supply from an external water source, such as a river, for example.

The basic operation of these systems is based on the choice of a reservoir and a counter reservoir. Fluid falls by gravity from the reservoir to the counter reservoir, the potential energy of said fluid being harnessed to produce electric energy. The fluid can be pumped from the counter reservoir to the reservoir in a period in which the cost of the electric energy used for pumping is lower, such that the benefit compensates for the energy generated in a period with respect to the expense entailed by pumping the fluid again in the other period.

In order to be profitable, these systems which are based on constructing an ad-hoc infrastructure must be of a considerable size, as in the case of the Spanish pumped-storage power plant, La Muela, for example. Therefore, investments are high and no return on them is obtained until construction is finished and the infrastructure is working. Given their enormous size, they only serve to regulate powers of tens or hundreds of megawatts. Furthermore, they are geographically localized and therefore far from many points where the energy with which they pump can be produced or the energy that they produce through turbines can be consumed.

Document WO07131305A describes a hydroelectric plant with indirect filling by hydro-accumulation, including a series of pumps driven by a watermill or the like, using the kinetic energy of the water course, water hose or conduits through which water is pumped towards the hydro-accumulation reservoir.

Document BR0305012 A relates to a system for returning water to a swamp, such that the water lost through spillways is returned to the swamp so that it can be used to perform its energy generating function. This is carried out at a low cost since it uses devices existing on the market (commercial pumps, conduits, scoop wheels, etc.).

Nevertheless, these systems require constructing an ad-hoc infrastructure, the cost of the infrastructure therefore being proportional to the number of elements to be constructed. Furthermore, due precisely to this cost, the choice of routes to perform transfers is greatly reduced. Nor is there any known system taking into account the losses caused by leaks in the conduits.

<u>Description of the Invention</u>

The present invention proposes a solution to the preceding problem by means of a system according to claim 1 and a method according to claim 12. The dependent claims define the preferred embodiments of the invention.

The first inventive aspect relates to a *mixed pumped-storage power plant comprising a water supply network comprising*

- *at least one primary or header tank located at a height HP,*
- *at least two secondary tanks located at a height H1 and H2, respectively,*

*wherein*

- *the at least one primary tank and the at least two secondary tanks are connected to one another by means of conduits and valve means, and*

*characterized in that it comprises*

- *at least a conversion means for converting the potential energy of the water into electric energy as it is transferred between two tanks by gravity,*
- *at least a water pumping means for pumping water from at least one tank to at least another higher tank, and*
- *control means in connection with at least an actuation means suitable for*

- *operating the valve means to allow transferring a water flow by gravity from at least one tank to at least another lower tank, and activating the at least a conversion means for producing electric energy from said associated water flow during a time period T1, and*
- *operating the valve means and the at least a pumping means to allow transferring a water flow by pumping from at least one of the tanks to another higher tank during a time period T2.*

In the context of the present invention, a tank is understood as any entity capable of storing water, either a conventional tank, i.e., a header tank, a tail tank, a cistern, etc., or any other storage entity, such as a swamp, a river, an aquifer, a lake or the sea, etc.

In the context of the present invention, a conduit is understood as any connection means putting two tanks in fluid contact. It can therefore be understood as any buried or exposed piping, line or conduit, a furrow, a channel, a cascade, etc.

In the context of the present invention, the control means are understood to be in connection with the actuation means in the sense that the control means control the actuation means, sending commands for activating or deactivating the means (valve means, conversion means, pumping means, etc.) on which said actuation means act. For said control, the control means use, among other aspects, the information received from the various detection systems of the storage power plant.

In the context of the present invention, the activation of the valve means can be used for various functions, such as for example for opening or closing a conduit and reducing leaks or as a step immediately before activating a conversion means or a pumping means, or for bypassing a conversion means or pumping means.

Advantageously with a storage power plant according to the invention, an infrastructure which has already been built for supplying water can be exploited and used for storing and obtaining energy, such that both systems mutually benefit: exploiting the water supply network allows the system for generating and storing energy to have a large amount of tanks and connections to perform the transfers, and on the other hand, the ability to generate energy allows supplying water and energy more efficiently to towns or cities where the water and energy generation and demand experiences strong hourly and seasonal time variations, and where the demand cannot be satisfied using the current energy supply system. Furthermore, planned water distribution allows distributing the available water more efficiently among population centers than with the systems of the state of the art.

Also advantageously with a storage power plant according to the invention, profit can be obtained for sizes and powers of the order of up to 10 kW, for example, which allows breaking down the investment and obtaining returns for small fractions of the total investment given that the pumped-storage power plant is formed by the coordination of many micro storage power plants. Furthermore, it allows regulating small fluctuations in the supply or demand of electric energy and doing this from a point geographically close to the location where said fluctuation occurs. The system even allows automatic load control for short periods such as for 15 minutes, for example.

In a particular embodiment of the invention, the height HP is greater than H1 and greater than H2.

In a particular embodiment of the invention, the storage power plant comprises a leak detection system for detecting a leak level comprising at least two direct or indirect flow rate measurement sensors in at least one conduit. Direct measurement is understood as the measurement of those sensors directly measuring the flow rate through the section where the sensors are installed. Indirect measurement is understood as the measurement of those sensors measuring a magnitude which is not the flow rate, but as a result of which the flow rate through said section can be calculated.

In a particular embodiment of the invention, the detection system comprises a set of pressure sensors distributed in at least one conduit.

In a particular embodiment of the invention, the control means are in connection with actuation means, said control means being suitable for closing the valve means and for deactivating the conversion means and the pumping means in a conduit when the leak level in said conduit exceeds a leak threshold. This allows optimizing the operation of the storage power plant, taking into account which connections have a leak level that is too high so as to render the use of that connection to perform transfer disadvantageous.

In a particular embodiment of the invention, the storage power plant comprises at least one chlorine content detection sensor for detecting a chlorine content level, and at least one chlorine metering means. In a particular embodiment of the invention, each tank comprises a chlorine content detection sensor. In a particular embodiment of the invention, each tank comprises a chlorine metering means. In a particular embodiment of the invention, the actuation means are suitable for activating the at least one chlorine metering means when the chlorine content level is below a chlorine threshold. This allows the water to restore, if necessary, its potability properties if it loses them during transfer, so the water can still be suitable for consumption by the population of the towns or cities being supplied.

In a particular embodiment of the invention, at least one tank comprises a level sensor.

In a particular embodiment of the invention, the control means are suitable for carrying out the following actions:

- receiving information relating to historical values corresponding to the time of year and whether it is a working or non-working day and to the estimated values of the water demand of each tank for a number of hours after starting the transfer, and
- selecting, using said received information,

  - before the period T1, at least one conduit in which water will be transferred by gravity, operating the corresponding valve means and activating the conversion means, and
  - before the period T2, at least one conduit in which water will be transferred by pumping, operating the corresponding valve means and activating the pumping means.

This allows integrating the information about the water supply needs of the different towns or cities being supplied by the tanks, such that in addition to making use of the water to generate energy, better supply for the towns or cities is allowed.

The second inventive aspect relates to a *method of obtaining and storing electric energy with a mixed pumped-storage power plant according to the first inventive aspect, characterized in that it comprises the following steps:*

- *during a time period T1,*

  - *operating the valve means for transferring a water flow by gravity between at least one tank and at least another lower tank, and*
  - *operating the at least a conversion means for producing electric energy from said associated water flow,*

- *during a time period T2,*

  - *operating the valve means and*
  - *operating the at least a pumping means for transferring a water flow from at least one of the tanks to another higher tank.*

In a particular embodiment of the invention, the method additionally comprises the steps of:

- checking the leak level of a conduit, preferably using the leak detection system, and
- if the leak level exceeds the leak threshold, deactivating the conversion means and the pumping means in said conduit.

In a particular embodiment of the invention, the leak level is checked at least once in at least one of the time periods T1 or T2.

In a particular embodiment of the invention, the method is carried out by using a day divided into time intervals as a time reference, and an index "n" covering said time intervals within said time reference.

In a particular embodiment of the invention, the control means receive information relating to historical values corresponding to the time of year and whether the reference day is a working or non-working day and to the estimated values of the water demand of each tank throughout said reference day.

In a particular embodiment of the invention, the control means perform the following actions:

- before the reference day starts, selecting at least one conduit in which water will be transferred by gravity, operating the corresponding valve means and activating the conversion means, and

- before the reference day starts, selecting at least one conduit in which water will be transferred by pumping, operating the corresponding valve means and activating the pumping means, depending on the estimated values of the water demand of each tank throughout said reference day.

In a particular embodiment of the invention, the control means select for each time interval n of the reference day the conduits between which the transfer will be performed by means of optimizing a cost function C

$$C = \sum_{n,i,j} C_{n,i,j}, \qquad where \ C_{n,i,j}$$

$$= \left( Q_{n,i,j} - F_{n,i,j} \right) \cdot g \cdot \left( h_{n,i} - h_{n,j} \right) \cdot \eta_{n,i,j} \cdot k_{n,i,j} \cdot T_{n,i,j} + F_{n,i,j} \cdot P \cdot T_{n,i,j}$$

i and j covering all the pairs of tanks of the storage power plant, including water exchanges with the environment and the outflows for external consumption, and n covering each of the time intervals of the day, and each of the terms being:

$C_{n,i,j}$: cost of transferring between tank i and tank j,

$Q_{n,i,j}$: mass flow rate (in kg/s) through the conduit when transferring between tank i and tank j, constant throughout the time $T_{n,i,j}$,

$F_{n,i,j}$: mass flow rate (in kg/s) lost due to leaks when transferring between tank i and tank j, constant throughout the time $T_{n,i,j}$, and estimated by means of historical data,

g: gravitational acceleration,

$h_{n,i}$: mean level height in tank i throughout the time interval n,

$h_{n,j}$: mean level height in tank j throughout the time interval n,

$\eta_{n,i,j}$: performance of the machine, turbine or turbine-pump in the event of transferring by gravity or pump in the event of transferring by pumping, constant throughout the time interval n,

$k_{n,i,j}$: electricity cost, for sale in the event of transferring by gravity (in which case it will have a positive value) or for purchase in the event of transferring by pumping (in which case it will have a negative value). It is estimated at the start of each day based on historical data and other information. It is considered that it remains constant throughout the time interval n,

$T_{n,i,j}$: time during which the transfer takes place within the time interval n, $T1_{n,i,j}$ in the event of transferring by gravity or $T2_{n,i,j}$ in the event of transferring by pumping,

P: price of water, constant.

wherein function optimization involves the limitation of maintaining the minimum level of the tanks for reasons relating to the use of the tank; being determined by supply needs in tanks for consumption and by ecological needs in natural reservoirs.

Both the mixed pumped-storage power plant and the method of generating and storing energy, both object of the present invention, provide a solution offering the advantage of allowing the absorption of electricity peaks generated by discontinuous energy generation sources the generation peaks of which do not coincide with the energy demand peaks, for example, wind energy. The storage power plant can store energy in the form of potential energy of the water in the higher tanks at all times.

The n time intervals are established such that during each of them the energy purchasing and selling price remain constant, as occurs during the periods of constant rate such as those periods which can be considered off-peak hours and peak hours, for example, or as occurs when the energy supply and demand of some systems are set, for example, by fixing a price by means of bidding for pre-established time periods such as each hour of the day, for example.

Throughout the entire document, external consumption must be understood as any consumption from the tanks, such as, for example, human consumption, industrial consumption, agricultural consumption, livestock consumption, etc.

All the features and/or the steps of the methods described in this specification (including the claims, description and drawings) can be combined in any combination, except the combinations of such mutually exclusive features.

Description of the Drawings

These and other features and advantages of the invention will be more clearly understood from the following detailed description of a preferred embodiment, given only by way of nonlimiting illustrative example with reference to the attached drawings.

Figure 1 shows a diagram of a system according to the invention, where all its components and the connections between them are observed.

Figure 2 shows a diagram of a method according to the invention performed between two generic entities.

Detailed Description of the Invention

The following references have been used in the explanation that will be given below:

0:      river, sea, rain, environment, etc.
1, 1':   dam, swamp, etc.
3:      PWTS, *Potable water treatment station*
4:      Desalination installation with its tank
5:      Low level header tank
6:      High level header tank

| 7-12: | Tail tank |
|---|---|
| 13: | PWTS output tank |
| 14: | Aquifer |
| C: | External consumption |
| 21: | Generic entity 1 |
| 22: | Generic entity 2 |
| 23: | Valve means |
| 24: | Conduit |
| 25: | Pumping means |
| 26: | Conversion means |
| 27: | Actuation means |
| 28: | Flow rate sensor |
| 29: | Pressure sensor |
| 30: | Chlorine content sensor |
| 31: | Chlorine metering means |
| 32: | Leak detection system |
| 33: | Control means (not depicted in the drawings) |
| 34: | Level sensor |

Likewise, the explanations will also make reference to the following nomenclatures:

n is the time index, it indicates the time interval in which each of the actions takes place. It is considered that the magnitudes remain constant throughout the time period indicated by the index n. The sum of all the intervals in n results in a day, which is the unit used as a reference, since the decisions on how to perform the transfers are made every day.

$h_{b,i}$ indicates the height at which the base of a natural reservoir or artificial tank i is located: $h_{b,1}$ is the height of the base of the dam (1), $h_{b,5}$ is the height of the base of the low level header tank (5), etc. In turn, $n_{n,i}$ indicates the fill level in the time interval n of a tank i with respect to its height $h_{b,i}$: $n_{n,1}$ is the fill level of the dam (1) with respect to the height of its base $h_{b,1}$, and so on and so forth. The level height of a tank in the time interval n is also defined as

$$h_{n,i} = h_{b,i} + n_{n,i}$$

$Q_{n,i,j}$ indicates the circulating flow rate in the time interval n between tank i and tank j. Hence, $Q_{n,5,6}$ is the circulating flow rate between the low level header tank (5) and the high level header tank (6). $Q_{n,5,0}$ indicates the losses to the environment (0) from the low level header tank (5), and $Q_{n,5,C}$ indicates the water flow which is transferred from the low level header tank (5) for external consumption.

$F_{n,i,j}$ indicates the leaks in the conduit (24) joining entities i and j, with a nomenclature criterion similar to that of the flow rate: $F_{n,5,6}$ represents the leaks occurring in the time interval n in the conduit (24) joining the low level header tank (5) and the high level header tank (6).

Description of the Figures

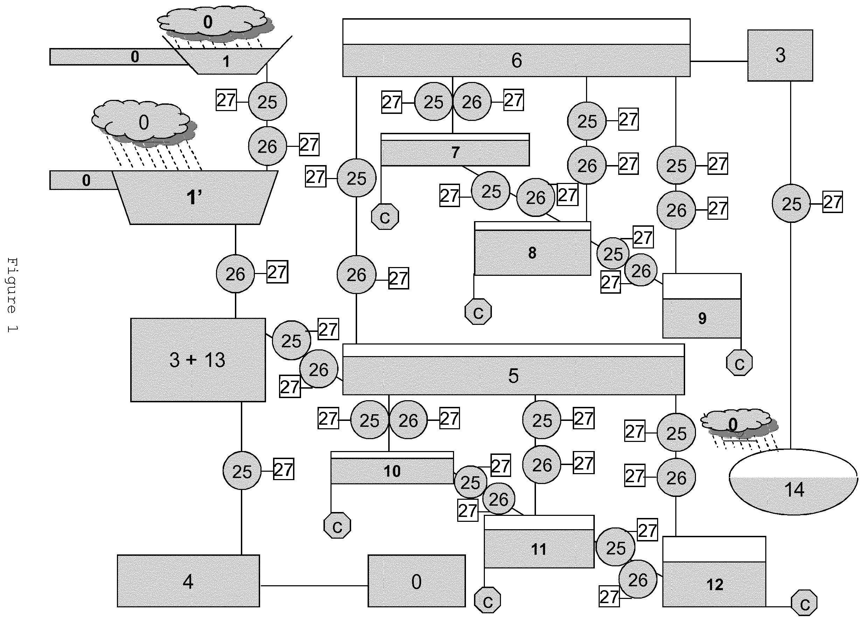

Figure 1 shows a preferred embodiment of a system according to the invention. This drawing shows the existence of the following elements:

- natural water supply elements or natural leak catchment elements (0): a river, the sea, rain, the environment, etc.,
- natural reservoirs (1), (1'): a dam, a swamp, etc.,
- two primary tanks, also called header tanks: the low level header tank (5) and the high level header tank (6),

- several secondary tanks (7-12),
- conversion means (26) located in each conduit (24),
- pumping means (25) located in each conduit (24),
- actuation means (27) located in the conversion means (26) and in the pumping means (25).

In a particular embodiment, the conversion means are a turbine or a pump used as a turbine or a turbine-pump. When a pump is used as a turbine or a turbine-pump, reversing its operation allows using same as pumping means.

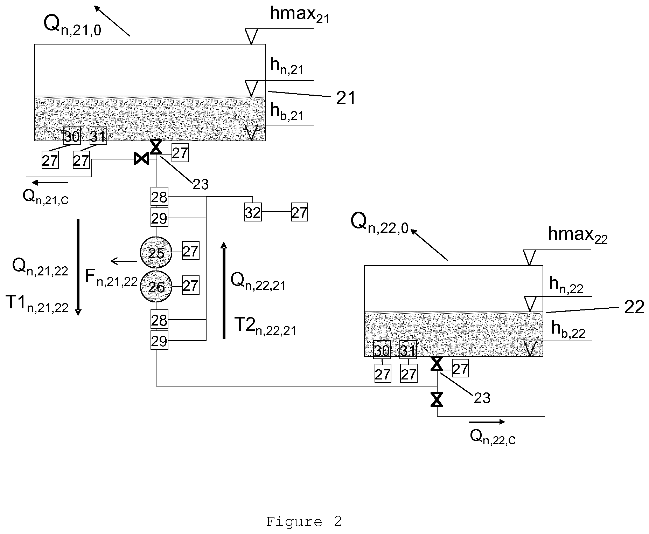

Figure 2 shows a detail of the system with the existing elements between a first generic entity i (21) and a second generic entity j (22). Generic entities must be understood as any natural supply elements or leak catchment elements (0), natural reservoirs (1, 1'), header tanks (5, 6), secondary tanks (7-12), external consumption (C). A series of elements are shown between these two entities:

- a valve (23) in each entity,
- two flow rate sensors (28) in each conduit (24),
- two pressure sensors (29) in each conduit (24), and
- some of the elements included in Figure 1, i.e., the pumping means (25), conversion means (26) and actuation means (27).

The leak detection system (32) uses the information received through the flow rate sensors (28) and the pressure sensors (29). The flow rate sensors (28) are essential for detecting leaks, whereas the pressure sensors (29) offer greater detail about the situation of the leak when there is one. The values of the leaks in the tanks are measured by comparing the output and input flow rates of the tank with the volume of stored water which is known by means of a level sensor (34) which furthermore serves for controlling the minimum levels required in each tank.

These minimum levels required in each tank can be determined by several causes:

- water supply for external consumption: this requirement determines that the minimum level of a tank must be the level necessary to handle the demand.
- minimum level due to ecological reasons: this requirement determines that the minimum level of a swamp, aquifer or any other reservoir of these characteristics must be the essential level to comply with the ecological conditions established by the competent authorities.

The maximum acceptable leak level will be established such that if said level is exceeded, the transfer is not profitable. Nevertheless, this does not mean that only profitable transfers are performed in the system, since the demand for external consumption can force a transfer to be performed through a conduit the leak level of which is greater than the maximum acceptable level. If said transfer is performed by gravity, the conversion means are also activated for extracting energy.

In view of the foregoing, a particular example of a method according to the invention is carried out, involving the following elements and variables:

- a first generic entity i (21) and a second generic entity j (22), between which the transfer will be performed, each with its level heights ($h_{n,i}$, $h_{n,j}$), valve means (23), chlorine content detection sensors (30), chlorine metering means (31),
- water leaks ($F_{n,i,j}$) in the transfer,
- a time $T1_{n,i,j}$ during which a flow rate ($Q_{n,i,j}$) is transferred from the first generic entity i (21) to the second generic entity j (22) by gravity, which may or may not be used for extracting energy by means of conversion means (26), particularly a turbine,
- a time $T2_{n,i,j}$ during which a flow rate ($Q_{n,i,j}$) is pumped from the first generic entity i (21) to the second generic entity j (22) by means of pumping means (25).

In particular embodiments, $T1_{n,i,j}$ or $T2_{n,i,j}$ are zero, since throughout all the time intervals there is no need to perform the two operations of transferring a flow rate by gravity and then pumping it again.

Before starting the operation, the control means (33) receive information relating to historical values corresponding to the time of year and whether it is a working or non-working day and to the estimated values of the water demand of said tanks throughout the reference day. This data provides the minimum levels of both aforementioned entities which must be complied with throughout that day because the water supply to the towns or cities would otherwise be jeopardized.

In addition to these necessary minimum levels in each tank, there is a second condition providing the system with the values of $T1_{n,i,j}$ and $T2_{n,i,j}$. This is the maximization of a cost function C:

$$C = \sum_{n,i,j} C_{n,i,j}, \quad where \ C_{n,i,j}$$

$$= \left(Q_{n,i,j} - F_{n,i,j}\right) \cdot g \cdot \left(h_{n,i} - h_{n,j}\right) \cdot \eta_{n,i,j} \cdot k_{n,i,j} \cdot T_{n,i,j} + F_{n,i,j} \cdot P \cdot T_{n,i,j}$$

i and j covering all the pairs of tanks of the storage power plant, and n covering each of the time intervals of the day, and each of the terms being:

$C_{n,i,j}$: cost of transferring between tank i and tank j,
$Q_{n,i,j}$: mass flow rate (in kg/s) through the conduit when transferring between tank i and tank j,

$F_{n,i,j}$: mass flow rate (in kg/s) lost due to leaks when transferring between tank i and tank j,

g: gravitational acceleration,

$h_{n,i}$: mean level height in tank i throughout the time interval n,

$h_{n,j}$: mean level height in tank j throughout the time interval n,

$\eta_{n,i,j}$: performance of the machine, turbine or turbine-pump in the event of transferring by gravity or pump in the event of transferring by pumping,

$k_{n,i,j}$: electricity cost, for sale in the event of transferring by gravity (in which case it will have a positive value) or for purchase in the event of transferring by pumping (in which case it will have a negative value). It is estimated at the start of each day based on historical data and other information. It is considered that it remains constant throughout the time interval n,

$T_{n,i,j}$: time during which the transfer takes place within the time interval n, $T1_{n,i,j}$ in the event of transferring by gravity or $T2_{n,i,j}$ in the event of transferring by pumping,

P: price of water.

To optimize this function, all the possible transfers between tanks (i, j) will be taken into account, including

- exchanges with the environment: the environment provides the storage power plant with rain water, river water or seawater; in turn the storage power plant yields water that evaporates from any of its tanks to the environment, and

- outflows for external consumption.

When evaluating this function, it is necessary to take into account the aforementioned limitations:

- In each time interval the tanks must maintain a minimum level determined before the reference day starts for reasons depending on the tank; in tanks for external consumption, the reasons include consumption demands; in natural reservoirs, the reasons include ecological demands.
- the actual water consumption demand must be met.
- water losses due to leaks must be restricted. The value to be used for the leaks ($F_{n,i,j}$) will be estimated by means of historical values, not with the data from the leak detection system (32), since the function optimization and the subsequent choice of the tanks between which the transfer will take place occurs before the leaks. These leak values detected by the leak detection system (32) are only used as alerts to warn of a possible excessively low value in the level of a tank, for example, and to enable assuring the minimum water supply required in all the tanks of the storage power plant.

Nevertheless, if due to supply needs it is necessary to use a conduit that is not profitable due to leak issues, the criterion of assuring supply will be given priority.

In a particular embodiment, in periods in which a variation of $Q_{n,i,j}$ has no influence on the cost (due to the fact that the price $k_{n,i,j}$ remains constant even though the transfer time is prolonged), $Q_{n,i,j}$ is set as the value which maximizes the performance of the pumping or conversion means placed in the conduit joining tanks i and j.

Once that data and the data of the current levels of the tanks for each time interval n and for each pair of tanks i, j are received and analyzed, the period $T1_{n,i,j}$ starts with the actuation means (27) operating the corresponding valve means (23) of both tanks i and j (21 and 22) after the command received from the control means (33), and activating the conversion means (26). The period $T1_{n,i,j}$ ends with the deactivation of the conversion means (26) and the closing of the valve means (23). Similarly, the period $T2_{n,i,j}$ starts with the actuation means (27) opening the corresponding valve means (23) of both tanks i and j (21 and 22) and activating the pumping means (25). The period $T2_{n,i,j}$ ends with the deactivation of the pumping means (25) and the closing of the valve means (23).

Furthermore in a particular embodiment, the control means (33) perform the following actions at least once a day:

- checking the leak level of a conduit (24) detected by the leak detection system (32), and
- if the leak level exceeds a specific predetermined leak threshold, not considering that conduit (24) for performing the steps indicated above in the method, not starting periods $T1_{n,i,j}$ or $T2_{n,i,j}$.

## Claims

1. A mixed pumped-storage power plant comprising a water catchment, treatment and supply network comprising

   • at least one primary or header tank (5, 6) located at a height HP (hb5, hb6),

• at least two secondary tanks (7-12) located at a height H1 and H2, respectively,

wherein

• the at least one primary tank (5, 6) and the at least two secondary tanks (7-12) are connected to one another by means of conduits (24), **characterized in that** every conduit (24) comprises valve means (23), and **in that** every conduit (24) comprises
• at least a conversion means (26) for converting the potential energy of the water into electric energy as it is transferred between two tanks (5-12) by gravity,
• at least a water pumping means (25) for pumping water from at least one tank (5-12) to at least another higher tank (5-12), and

**in that** the power plant comprises

• control means (33) in connection with at least an actuation means (27), suitable for

- operating the valve means (23) to allow transferring a water flow (Q) by gravity from at least one tank (5-12) to at least another lower tank (5-12), and activating or leaving inactive the at least a conversion means (26) for producing electric energy from said associated water flow (Q) during a time period T1, and
- operating the valve means (23) and the at least a pumping means (25) to allow transferring a water flow (Q) by pumping from at least one of the tanks (5-12) to another higher tank (5-12) during a time period T2.

2. The mixed pumped-storage power plant according to claim 1, **characterized in that** the height HP is greater than H1 and greater than H2.

3. The mixed pumped-storage power plant according to any of claims 1 or 2, comprising a leak detection system (32) for detecting a leak level **characterized in that** it comprises at least two direct or indirect flow rate measurement sensors (28) in at least one conduit (24).

4. The mixed pumped-storage power plant according to claim 3, where the leak system (32) comprises a set of pressure sensors (29) distributed in at least one conduit (24).

5. The mixed pumped-storage power plant according to any of claims 3 or 4, **characterized in that** the control means (33) are in connection with actuation means (27) suitable for closing the valve means (23) and deactivating the conversion means (26) and the pumping means (25) in a conduit (24) when the leak level in said conduit (24) exceeds a leak threshold.

6. The mixed pumped-storage power plant according to any of the preceding claims, **characterized in that** it comprises at least one chlorine content detection sensor (30) for detecting a chlorine content level, and at least one chlorine metering means (31).

7. The mixed pumped-storage power plant according to claim 6, **characterized in that** the actuation means (27) are suitable for activating the at least one chlorine metering means (31) when the chlorine content level is below a chlorine threshold.

8. The mixed pumped-storage power plant according to any of the preceding claims, **characterized in that** at least one tank (5-12) comprises a level sensor (34).

9. The mixed pumped-storage power plant according to any of the preceding claims, **characterized in that** the control means (33) are suitable for carrying out the following actions:

• receiving information relating to historical values corresponding to the time of year and whether it is a working or non-working day and to the estimated values of the water demand of each tank for a number of hours after starting the transfer, and
• selecting, using said received information,

- before the period T1, at least one conduit (24) in which water will be transferred by gravity, operating the corresponding valve means (23) and activating the conversion means (26), and

- before the period T2, at least one conduit (24) in which water will be transferred by pumping, operating the corresponding valve means (23) and activating the pumping means (25).

10. A method of obtaining and storing electric energy with a mixed pumped-storage power plant according to any of the preceding claims, **characterized in that** it comprises the following steps:

  • during a time period T1,

    - operating the valve means (23) to allow transferring a water flow ($Q_{i,j}$) by gravity from at least one tank i (5-12) to at least another lower tank j (5-12), and
    - operating at least a conversion means (26) for producing electric energy from said associated water flow ($Q_{i,j}$),

  • during a time period T2,

    - operating the valve means (23) and
    - operating the at least a pumping means (25) for transferring a water flow (Q) from at least one of the tanks (5-12) to another higher tank (5-12).

11. The method of obtaining and storing electric energy with a mixed pumped-storage power plant according to claim 10, **characterized in that** it additionally comprises the steps of:

  • checking the leak level of a conduit (24) detected by the leak detection system (32), and
  • if the leak level exceeds the leak threshold, deactivating the conversion means (26) and the pumping means (25) in said conduit (24).

12. The method of obtaining and storing electric energy with a mixed pumped-storage power plant according to any of claims 10 to 11, wherein the leak level is checked at least once in at least one of the time periods T1 or T2.

13. The method of obtaining and storing electric energy with a mixed pumped-storage power plant according to any of claims 10 to 12, **characterized in that** it is carried out by using a day divided into time intervals as a time reference, and an index "n" covering said time intervals within said time reference.

14. The method of obtaining and storing electric energy with a mixed pumped-storage power plant according to claim 13, **characterized in that** the control means (33) perform the following actions:

  • receiving information relating to historical values corresponding to the time of year and whether the reference day is a working or non-working day and to the estimated values of the water demand of each tank throughout said reference day,
  • before the reference day starts, selecting, using the received information, at least one conduit (24) in which water will be transferred by gravity, operating the corresponding valve means (23) and activating the conversion means (26), and
  • before the reference day starts, selecting, using the received information, at least one conduit (24) in which water will be transferred by pumping, operating the corresponding valve means (23) and activating the pumping means (25), depending on the estimated values of the water demand of each tank throughout the reference day.

15. The method of obtaining and storing energy with a mixed pumped-storage power plant according to claim 14, **characterized in that** the control means (33) select for each time interval n of the reference day the conduits (24) between which the transfer will be performed by means of optimizing a cost function C

$$C = \sum_{n,i,j} C_{n,i,j}$$

$$where \; C_{n,i,j} = \left(Q_{n,i,j} - F_{n,i,j}\right) \cdot g \cdot \left(h_{n,i} - h_{n,j}\right) \cdot \eta_{n,i,j} \cdot k_{n,i,j} \cdot T_{n,i,j} + F_{n,i,j} \cdot P \cdot T_{n,i,j}$$

i and j covering all the pairs of tanks of the storage power plant, including water exchanges with the environment and the outflows for external consumption, and n covering each of the time intervals of the day, and each of the terms being:

$C_{n,i,j}$: cost of transferring between tank i and tank j,

$Q_{n,i,j}$: mass flow rate (in kg/s) through the conduit when transferring between tank i and tank j, constant throughout the time $T_{n,i,j}$,

$F_{n,i,j}$: mass flow rate (in kg/s) lost due to leaks when transferring between tank i and tank j, constant throughout the time $T_{n,i,j}$, and estimated by means of historical data,

g: gravitational acceleration,

$h_{n,i}$: mean level height in tank i throughout the time interval n,

$h_{n,j}$: mean level height in tank j throughout the time interval n,

$\eta_{n,i,j}$: performance of the machine, turbine or turbine-pump in the event of transferring by gravity or pump in the event of transferring by pumping, constant throughout the time interval n,

$k_{n,i,j}$: electricity cost, for sale in the event of transferring by gravity (in which case it will have a positive value) or for purchase in the event of transferring by pumping (in which case it will have a negative value). It is estimated at the start of each day based on historical data and other information. It is considered that it remains constant throughout the time interval n,

$T_{n,i,j}$: time during which the transfer takes place within the time interval n, $T1_{n,i,j}$ in the event of transferring by gravity or $T2_{n,i,j}$ in the event of transferring by pumping,

P: price of water, constant,

wherein the function optimization involves the limitation of maintaining the minimum level of the tanks for reasons relating to the use of the tank; being determined by supply needs in tanks for external consumption and by ecological needs in natural reservoirs.

## Patentansprüche

1.  Gemisches Pumpspeicherkraftwerk, umfassend ein Wasser-Stau-, Aufbereitungs- und Zuführnetz, umfassend:

    - wenigstens einen Primär- oder Verteilertank (5, 6), der sich in einer Höhe HP (hb5, hb6) befindet,
    - wenigstens zwei Sekundärtanks (7-12), die sich in einer Höhe H1 bzw. H2 befinden,

    wobei

    - der wenigstens eine Primärtank (5, 6) und die wenigstens zwei Sekundärtanks (7-12) miteinander mit Hilfe von Leitungen (24) verbunden sind, **dadurch gekennzeichnet, dass** jede Leitung (24) Ventileinrichtungen (23) umfasst, und dass jede Leitung (24) umfasst:
    - wenigstens eine Umwandlungseinrichtung (26) zum Umwandeln der potentiellen Energie des Wassers in elektrische Energie, wenn es zwischen zwei Tanks (5-12) durch Schwerkraft transferiert wird,
    - wenigstens eine Wasserpumpeinrichtung (25) zum Pumpen von Wasser von wenigstens einem Tank (5-12) zu wenigstens einem weiteren höheren Tank (5-12), und dass das Kraftwerk umfasst:
    - Steuereinrichtungen (33) in Verbindung mit wenigstens einer Betätigungseinrichtung (27), die sich dazu eignet

        - die Ventileinrichtungen (23) zu betätigen, um das Transferieren eines Wasserflusses (Q) durch Schwerkraft von wenigstens einem Tank (5-12) zu wenigstens einem weiteren tieferen Tank (5-12) zu gestatten und die wenigstens eine Umwandlungseinrichtung (26) zu aktivieren oder inaktiv zu belassen, um elektrische Energie aus dem zugehörigen Wasserfluss (Q) während einer Zeitperiode T1 zu erzeugen, und
        - die Ventileinrichtungen (23) sowie die wenigstens eine Pumpeinrichtung (25) zu betätigen, um das Transferieren eines Wasserflusses (Q) durch Pumpen von wenigstens einem der Tanks (5-12) zu einem weiteren höheren Tank (5-12) während einer Zeitperiode T2 zu gestatten.

2.  Gemischtes Pumpspeicherkraftwerk nach Anspruch 1, **dadurch gekennzeichnet, dass** die Höhe HP größer als H1 und größer als H2 ist.

3.  Gemischtes Pumpspeicherkraftwerk nach einem der Ansprüche 1 oder 2, umfassend ein Leckerfassungssystem (32) zum Erfassen eines Leckgrades, **dadurch gekennzeichnet, dass** es zwei direkte oder indirekte Flussraten-Messsensoren (28) in wenigstens einer Leitung (24) umfasst.

**4.** Gemischtes Pumpspeicherkraftwerk nach Anspruch 3, bei dem das Lecksystem (32) einen Satz von Drucksensoren (29) umfasst, die in wenigstens einer Leitung (24) verteilt sind.

**5.** Gemischtes Pumpspeicherkraftwerk nach einem der Ansprüche 3 oder 4, **dadurch gekennzeichnet, dass** die Steuereinrichtungen (33) in Verbindung mit Betätigungseinrichtungen (27) sind, die sich dazu eignen, die Ventileinrichtungen (23) zu schließen und die Umwandlungseinrichtung (26) sowie die Pumpeinrichtung (25) in einer Leitung (24) zu deaktivieren, wenn der Leckgrad in der Leitung (24) einen Leckschwellenwert überschreitet.

**6.** Gemischtes Pumpspeicherkraftwerk nach einem der vorhergehenden Ansprüche, **dadurch gekennzeichnet, dass** es wenigstens einen Chlorgehalt-Erfassungssensor (30) zum Erfassen eines Chlorgehaltspegels und wenigstens eine Chlormesseinrichtung (31) umfasst.

**7.** Gemischtes Pumpspeicherkraftwerk nach Anspruch 6, **dadurch gekennzeichnet, dass** sich die Betätigungseinrichtungen (27) dazu eignen, die wenigstens eine Chlormesseinrichtung (31) zu aktivieren, wenn sich der Chorgehaltspegel unter einem Chlorschwellenwert befindet.

**8.** Gemischtes Pumpspeicherkraftwerk nach einem der vorhergehenden Ansprüche, **dadurch gekennzeichnet, dass** wenigstens ein Tank (5-12) einen Pegelsensor (34) umfasst.

**9.** Gemischtes Pumpspeicherkraftwerk nach einem der vorhergehenden Ansprüche, **dadurch gekennzeichnet, dass** sich die Steuereinrichtungen (33) dazu eignen, die folgenden Aktionen auszuführen:

- Empfangen von Informationen, die sich auf vergangene Werte entsprechend der Jahreszeit und ob es ein Arbeits- oder Feiertag ist und auf die geschätzten Werte des Wasserbedarfs jedes Tanks für eine Anzahl von Stunden nach dem Beginn des Transfers beziehen, und
- Wählen, mit Hilfe der Empfangenen Informationen,

vor der Periode T1, wenigstens einer Leitung (24), in der Wasser durch Schwerkraft transferiert wird, Betätigen der entsprechenden Ventileinrichtungen (23) und Aktivieren der Umwandlungseinrichtung (26), und
vor der Periode T2, wenigstens einer Leitung (24), in der Wasser durch Pumpen transferiert wird, Betätigen der entsprechenden Ventileinrichtung (23) und Aktivieren der Pumpeinrichtung (25).

**10.** Verfahren für die Gewinnung und Speicherung elektrischer Energie mit einem gemischten Pumpspeicherkraftwerk nach einem der vorherigen Ansprüche, **dadurch gekennzeichnet, dass** es die folgenden Schritte umfasst:

- während einer Zeitperiode T1,

Betätigen der Ventileinrichtungen (23), um einen Transfer eines Wasserflusses ($Q_{i,j}$) durch Schwerkraft von wenigstens einem Tank i (5-12) zu wenigstens einem weiteren, tieferen Tank j (5-12) zu gestatten, und Betätigen wenigstens einer Umwandlungseinrichtung (26) zum Erzeugen elektrischer Energie aus dem zugehörigen Wasserfluss ($Q_{i,j}$),

- während einer Zeitperiode T2,

Betätigen der Ventileinrichtungen (23) und
Betätigen der wenigstens einen Pumpeinrichtung (25) für das Transferieren eines Wasserflusses (Q) von wenigstens einem der Tanks (5-12) zu einem weiteren, höheren Tank (5-12).

**11.** Verfahren für das Gewinnen und Speichern elektrischer Energie mit einem gemischten Pumpspeicherkraftwerk nach Anspruch 10, **dadurch gekennzeichnet, dass** es zusätzlich folgende Schritte umfasst:

- Prüfen eines Leckgrades einer Leitung (24), der von dem Leckerfassungssystem (32) erfasst wird, und
- sofern der Leckgrad den Leckschwellenwert überschreitet, Deaktivieren der Umwandlungseinrichtung (26) und der Pumpeinrichtung (25) in der Leitung (24).

**12.** Verfahren für die Gewinnung und Speicherung elektrischer Energie mit einem gemischten Pumpspeicherkraftwerk nach einem der Ansprüche 10 bis 11, bei dem der Leckgrad wenigstens einmal in wenigstens einer der Zeitperioden T1 oder T2 überprüft wird.

13. Verfahren für das Gewinnen und Speichern elektrischer Energie mit einem gemischten Pumpspeicherkraftwerk nach einem der Ansprüche 10 bis 12, **dadurch gekennzeichnet, dass** es dadurch ausgeführt wird, dass ein Tag in Zeitintervalle als Zeitbezug unterteilt und ein Index "n" verwendet wird, der die Zeitintervalle innerhalb des Zeitbezuges abdeckt.

14. Verfahren für das Gewinnen und Speichern elektrischer Energie mit einem gemischten Pumpspeicherkraftwerk nach Anspruch 13, **dadurch gekennzeichnet, dass** die Steuereinrichtungen (33) die folgenden Aktionen ausführen:

- Empfangen von Informationen, die sich auf vergangene Werte entsprechend der Jahreszeit und ob es ein Arbeits- oder Feiertag ist und auf die geschätzten Werte des Wasserbedarfs jedes Tanks im Verlauf des Bezugstages beziehen, und
- bevor der Bezugstag beginnt, Wählen mit Hilfe der empfangenen Informationen wenigstens einer Leitung (24), in der das Wasser durch Schwerkraft transferiert wird, Betätigen der entsprechenden Ventileirichtungen (23) und aktivieren der Umwandlungseinrichtung (26), und
- bevor der Bezugstag beginnt, Wählen mit Hilfe der empfangenen Informationen wenigstens einer Leitung (24), in der Wasser durch Pumpen transferiert wird, Betätigen der entsprechenden Ventileinrichtungen (23) und Aktivieren der Pumpeinrichtung (25) in Abhängigkeit der geschätzten Werte des Wasserbedarfs jedes Tanks im Verlaufe des Bezugstages.

15. Verfahren für die Gewinnung und Speicherung von Energie mit einem gemischten Pumpspeicherkraftwerk nach Anspruch 14, **dadurch gekennzeichnet, dass** die Steuereirichtungen (33) für jedes Zeitintervall n des Bezugstages die Leitungen (24), zwischen denen der Transfer ausgeführt werden wird, durch optimieren einer Kostenfunktion C wählen

$$C = \sum_{n,i,j} C_{n,i,j}$$

$$wobei\ C_{n,i,j} = \left(Q_{n,i,j} - F_{n,i,j}\right) \cdot g \cdot \left(h_{n,i} - h_{n,j}\right) \cdot \eta_{n,i,j} \cdot k_{n,i,j} \cdot T_{n,i,j} + F_{n,i,j} \cdot P \cdot T_{n,i,j}$$

i und j sämtliche Paare von Tanks des Speicherkraftwerks einschließlich Wasseraustauschen mit der Umwelt und den Abflüssen für externen Verbrauch abdecken, und n jedes der Zeitintervalle des Tages abdeckt und die Terme jeweils sind:

$C_{n,i,j}$: Kosten des Transferierens zwischen Tank i und Tank j,
$Q_{n,i,j}$: Massenflussrate (in kg/s) durch die Leitung bei dem Transfer zwischen Tank i und Tank j, im Verlauf der Zeit $T_{n,i,j}$ konstant,
$F_{n,i,j}$: Massenflussrate (in kg/s), verloren infolge von Lecks bei dem Transfer zwischen Tank i und Tank j, konstant im Verlauf der Zeit $T_{n,i,j}$ und geschätzt mit Hilfe historischer Daten,
g: Erdbeschleunigung,
$h_{n,i}$: mittlere Pegelhöhe in Tank i im Verlauf des Zeitintervalls n,
$h_{n,j}$: mittlere Pegelhöhe in Tank j im Verlauf des Zeitintervalls n,
$\eta_{n,i,j}$: Leistungsfähigkeit der Maschine, der Turbine oder Turbinenpumpe für den Fall des Transfers durch Schwerkraft, oder der Pumpe für den Fall des Transferierens durch Pumpen, konstant im Verlauf des Zeitintervalls n,
$k_{n,i,j}$: Elektrizitätskosten, für den Verkauf im Falle des Transfers durch Schwerkraft (wobei sie in diesem Fall einen positiven Wert haben werden) oder für den Erwerb für den Fall des Transfers durch Pumpen (wobei sie in diesem Fall einen negativen Wert haben werden). Sie werden zu Beginn jedes Tages auf der Basis historischer Daten und anderer Informationen geschätzt. Es wird davon ausgegangen, dass sie im Verlauf des Zeitintervalls n konstant bleiben,
$T_{n,i,j}$: Zeit, zu der der Transfer innerhalb des Zeitintervalls n stattfindet, $T1_{n,i,j}$ für den Fall des Transfers durch Schwerkraft oder $T2_{n,i,j}$ für den Fall des Transfers durch Pumpen,
P: Wasserpreis, konstant,

wobei die Funktionsoptimierung die Begrenzung der Beibehaltung des Minimalpegels der Tanks aus Gründen umfasst, die sich auf die Verwendung des Tanks beziehen; bestimmt durch Versorgungsbedarf in Tanks für externen Verbrauch und durch ökologische Erfordernisse in natürlichen Reservoirs.

**Revendications**

1. Centrale de pompage mixte comprenant un réseau de captage, de traitement et de distribution d'eau comprenant

   • au moins un réservoir principal ou de tête (5, 6) situé à une hauteur HP (hb5, hb6),
   • au moins deux réservoirs secondaires (7-12) situés à une hauteur H1 et H2, respectivement,

   dans laquelle

   • l'au moins un réservoir principal (5, 6) et les au moins deux réservoirs secondaires (7-12) sont reliés les uns aux autres au moyen de conduits (24),

   **caractérisée en ce que** chaque conduit (24) comprend des moyens formant valve (23) et **en ce que** chaque conduit (24) comprend

   • au moins un moyen de conversion (26) pour convertir l'énergie potentielle de l'eau en énergie électrique lorsqu'elle est transférée entre deux réservoirs (5-12) par gravité,
   • au moins un moyen de pompage d'eau (25) pour pomper l'eau d'au moins un réservoir (5-12) vers au moins un autre réservoir (5-12) plus élevé, et **en ce que** la centrale comprend
   • des moyens de commande (33) en liaison avec au moins un moyen d'actionnement (27), adapté pour

      - actionner les moyens formant valve (23) pour permettre le transfert d'un écoulement d'eau (Q) par gravité d'au moins un réservoir (5-12) vers au moins un autre réservoir (5-12) plus bas, et activer ou laisser inactif l'au moins un moyen de conversion (26) pour produire de l'énergie électrique à partir dudit écoulement d'eau (Q) associé pendant une période de temps T1, et
      - actionner les moyens formant valve (23) et l'au moins un moyen de pompage (25) pour permettre le transfert d'un écoulement d'eau (Q) par pompage d'au moins un des réservoirs (5-12) vers un autre réservoir (5-12) plus bas pendant une période de temps T2.

2. Centrale de pompage mixte selon la revendication 1, **caractérisée en ce que** la hauteur HP est supérieure à H1 et supérieure à H2.

3. Centrale de pompage mixte selon l'une quelconque des revendications 1 et 2, comprenant un système de détection de fuite (32) pour détecter un niveau de fuite, **caractérisée en ce qu'**elle comprend au moins deux capteurs de mesure de débit directs ou indirects (28) dans au moins un conduit (24).

4. Centrale de pompage mixte selon la revendication 3, où le système de fuite (32) comprend un ensemble de capteurs de pression (29) répartis dans au moins un conduit (24).

5. Centrale de pompage mixte selon l'une quelconque des revendications 3 et 4, **caractérisée en ce que** les moyens de commande (33) sont en liaison avec des moyens d'actionnement (27) adaptés pour fermer les moyens formant valve (23) et désactiver les moyens de conversion (26) et les moyens de pompage (25) dans un conduit (24) lorsque le niveau de fuite dans ledit conduit (24) dépasse un seuil de fuite.

6. Centrale de pompage mixte selon l'une quelconque des revendications précédentes, **caractérisée en ce qu'**elle comprend au moins un capteur de détection de teneur en chlore (30) pour détecter un niveau de teneur en chlore, et au moins un moyen de dosage de chlore (31).

7. Centrale de pompage mixte selon la revendication 6, **caractérisée en ce que** les moyens d'actionnement (27) sont adaptés pour activer l'au moins un moyen de dosage de chlore (31) lorsque le niveau de teneur en chlore est inférieur à un seuil de chlore.

8. Centrale de pompage mixte selon l'une quelconque des revendications précédentes, **caractérisée en ce qu'**au moins un réservoir (5-12) comprend un capteur de niveau (34).

**9.** Centrale de pompage mixte selon l'une quelconque des revendications précédentes, **caractérisée en ce que** les moyens de commande (33) sont adaptés pour effectuer les actions suivantes :

- la réception d'informations relatives à des valeurs historiques correspondant au moment de l'année et indiquant s'il s'agit d'un jour ouvrable ou non ouvrable et aux valeurs estimées de la demande en eau de chaque réservoir pendant un nombre d'heures après le début du transfert, et
- la sélection, au moyen desdites informations reçues,

  - avant la période T1, d'au moins un conduit (24) dans lequel de l'eau sera transférée par gravité, actionnement des moyens formant valve (23) correspondants et activation des moyens de conversion (26), et
  - avant la période T2, d'au moins un conduit (24) dans lequel de l'eau sera transférée par pompage, actionnement des moyens formant valve (23) correspondants et activation des moyens de pompage (25).

**10.** Procédé d'obtention et de stockage d'énergie électrique avec une centrale de pompage mixte selon l'une quelconque des revendications précédentes, **caractérisé en ce qu'**il comprend les étapes suivantes :

- pendant une période de temps T1,

  - l'actionnement des moyens formant valve (23) pour permettre le transfert d'un écoulement d'eau ($Q_{i,j}$) par gravité d'au moins un réservoir i (5-12) vers au moins un autre réservoir j (5-12) plus bas, et
  - l'actionnement d'au moins un moyen de conversion (26) pour produire une énergie électrique à partir dudit écoulement d'eau ($Q_{i,j}$) associé,

- pendant une période de temps T2,

  - l'actionnement des moyens formant valve (23) et
  - l'actionnement de l'au moins un moyen de pompage (25) pour transférer un écoulement d'eau (Q) d'au moins un des réservoirs (5-12) à un autre réservoir (5-12) plus élevé.

**11.** Procédé d'obtention et de stockage d'énergie électrique avec une centrale de pompage mixte selon la revendication 10, **caractérisé en ce qu'**il comprend en outre les étapes suivantes :

- la vérification du niveau de fuite d'un conduit (24) détecté par le système de détection de fuite (32), et
- si le niveau de fuite dépasse le seuil de fuite, la désactivation des moyens de conversion (26) et des moyens de pompage (25) dans ledit conduit (24).

**12.** Procédé d'obtention et de stockage d'énergie électrique avec une centrale de pompage mixte selon l'une quelconque des revendications 10 à 11, dans lequel le niveau de fuite est vérifié au moins une fois dans au moins une des périodes de temps T1 ou T2.

**13.** Procédé d'obtention et de stockage d'énergie électrique avec une centrale de pompage mixte selon l'une quelconque des revendications 10 à 12, **caractérisé en ce qu'**il est effectué en utilisant un jour divisé en intervalles de temps en tant que référence temporelle, et un indice « n » couvrant lesdits intervalles de temps à l'intérieur de ladite référence temporelle.

**14.** Procédé d'obtention et de stockage d'énergie électrique avec une centrale de pompage mixte selon la revendication 13, **caractérisé en ce que** les moyens de commande (33) effectuent les actions suivantes :

- la réception d'informations relatives à des valeurs historiques correspondant au moment de l'année et indiquant si le jour de référence est un jour ouvrable ou non ouvrable et aux valeurs estimées de la demande en eau de chaque réservoir tout au long dudit jour de référence,
- avant que le jour de référence ne commence, la sélection, au moyen des informations reçues, d'au moins un conduit (24) dans lequel de l'eau sera transférée par gravité, actionnement des moyens formant valve (23) correspondants et activation des moyens de conversion (26), et
- avant que le jour de référence ne commence, la sélection, au moyen des informations reçues, d'au moins un conduit (24) dans lequel de l'eau sera transférée par pompage, actionnement des moyens formant valve (23) correspondants et activation des moyens de pompage (25), en fonction des valeurs estimées de la demande en eau de chaque réservoir tout au long du jour de référence.

**15.** Procédé d'obtention et de stockage d'énergie avec une centrale de pompage mixte selon la revendication 14, **caractérisé en ce que** les moyens de commande (33) sélectionnent pour chaque intervalle de temps n du jour de référence les conduits (24) entre lesquels le transfert sera effectué grâce à l'optimisation d'une fonction de coût C

$$C = \sum_{n,i,j} C_{n,i,j}$$

$$\text{où } C_{n,i,j} = \left( Q_{n,i,j} - F_{n,i,j} \right) \cdot g \cdot \left( h_{n,i} - h_{n,j} \right) \cdot \eta_{n,i,j} \cdot k_{n,i,j} \cdot T_{n,i,j} + F_{n,i,j} \cdot P \cdot T_{n,i,j}$$

i et j couvrant toutes les paires de réservoirs de la centrale, incluant les échanges d'eau avec l'environnement et les écoulements en sortie pour la consommation externe, et n couvrant chacun des intervalles de temps du jour, et chacun des termes étant :

$C_{n,i,j}$: *coût de transfert entre le réservoir i et le réservoir j,*

$Q_{n,i,j}$: *débit mastique (en kg/s) à tra vers le conduit lors du transfert entre le réservoir i et le réservoir j, constant tout au long du temps $T_{n,i,j}$,*

$F_{n,i,j}$: *débit massique (en kg/s) perdu en raison de fuites lors du transfert entre le réservoir i et le réservoir j, constant tout au long du temps $T_{n,i,j}$, et estimé au moyen de données historiques,*

*g : accélération gravitationnelle,*

$h_{n,i}$ *: hauteur de niveau moyenne dans le réservoir i tout au long de l'intervalle de temps n,*

$h_{n,j}$ *: hauteur de niveau moyenne dans le réservoir j tout au long de l'intervalle de temps n,*

$\eta_{n,i,j}$ *: performance de la machine, turbine ou turbo-pompe en cas de transfert par gravité ou de la pompe en cas de transfert par pompage, constante tout au long de l'intervalle de temps n,*

$k_{n,i,j}$ *: coût d'électricité, à la vente, en cas de transfert par gravité (auquel cas, il aura une valeur positive) ou à l'achat, en cas de transfert par pompage (auquel cas, il aura une valeur négative). Il est estimé au début de chaque jour sur la base de données historiques et d'autres informations Il est considéré qu'il reste constant tout au long de l'intervalle de temps n,*

$T_{n,i,j}$ *: temps pendant lequel te transfert a lieu à l'intérieur de l'intervalle de temps n, $T1_{n,i,j}$ en cas de transfert par gravité ou $T2_{n,i,j}$ en cas de transfert par pompage,*

*P : prix de l'eau, constant,*

dans lequel l'optimisation de la fonction implique la limitation du maintien du niveau minium des réservoirs pour des raisons relatives à l'utilisation du réservoir ; étant déterminée par les besoins de distribution dans les réservoirs pour consommation externe et par les besoins écologiques dans les réservoirs naturels.

Figure 1

Figure 2

**EP 2 896 821 B1**

**Patent documents cited in the description**

- WO 07131305 A

- BR 0305012 A